**Europäisches Patentamt**

**European Patent Office**

**Office européen des brevets**

(11) Veröffentlichungsnummer: **0 464 697 A2**

# EUROPÄISCHE PATENTANMELDUNG

(21) Anmeldenummer: **91110708.4**

(22) Anmeldetag: **28.06.91**

(51) Int. Cl.5: **G01G 19/22**

(30) Priorität: **03.07.90 DE 4021161**

(43) Veröffentlichungstag der Anmeldung:
**08.01.92 Patentblatt 92/02**

(84) Benannte Vertragsstaaten:
**AT BE CH DE DK ES FR GB GR IT LI NL SE**

(71) Anmelder: **Colortronic GmbH**
**Otto-Hahn-Str. 20**
**W-8382 Friedrichsdorf/Ts.(DE)**

(72) Erfinder: **Sarig, Elain**
**14, Hameorer S.T. Givatayin**
**I-53223 Tel Aviv(IL)**
Erfinder: **Roth, Udo**
**Westring 35**
**W-6479 Ranstadt(DE)**

(74) Vertreter: **Schieferdecker, Lutz, Dipl.-Ing.**
**Herrnstrasse 37**
**W-6050 Offenbach am Main(DE)**

(54) **Verfahren und Vorrichtung zum Dosieren.**

(57) Die Erfindung betrifft ein Verfahren und eine Vorrichtung zum Dosieren von teilchenförmigem, flüssigem oder pastösem Gut. Der Kern der Erfindung besteht darin, daß zum Erreichen eines genauen Mischungsverhältnisses eine kombinierte, volumetrisch und gravimetrisch arbeitende Dosierung erfolgt, wobei zunächst je Komponente eine oder mehrere Basismengen volumetrisch dosiert werden (z.B. in einer Vordosiereinrichtung), daß dann das Gewicht der Basismenge oder das Gewicht einer ganzzahligen Anzahl von Basismengen jeder Komponente ermittelt wird und daß daraufhin das Mischungsverhältnis/Gewichtsverhältnis der Basismengen der verschiedenen Komponenten ermittelt und mit einem Sollwert (dem gewünschten Mischungsverhältnis) verglichen wird, woraufhin im Falle einer Abweichung des ermittelten Mischungsverhältnisses/Gewichtsverhältnisses vom Sollwert zwecks Korrektur die Anzahl der Basismengen der jeweiligen Komponenten geändert und die obigen Schritte sodann erneut bis zum Erreichen des Sollwertes oder eines tolerierbaren Mischungsverhältnisses/Gewichtsverhältnisses wiederholt werden.

Fig. 1

Die Erfindung betrifft ein Verfahren und eine Vorrichtung zum Dosieren von teilchenförmigem (z.B. Granulat), flüssigem oder pastösem Gut (Material), insbesondere zum Herstellen einer Mischung aus mindestens zwei Komponenten in einem vorgegebenem, gravimetrischen (d.h. "auf das Gewicht bezogenen") Mischungsverhältnis.

Gegenstand der Erfindung ist insbesondere die Bildung einer Mischung aus wenigstens zwei Komponenten, wie z.B. von rieselfähigem Kunststoffmaterial und einem oder mehreren Additiven, z.B. Farbpigmenten, wobei die Additive in bestimmten Gewichtsanteilen dem Kunststoffrohmaterial hinzugefügt werden müssen, um eine verarbeitbare Mischung mit gewünschten Eigenschaften zu erhalten.

Grundsätzlich kann die Dosierung direkt nach Gewicht oder indirekt auf volumetrischem Wege erfolgen. Ein bekanntes, gravimetrisches Dosierverfahren ist das sogenannte Loss-in-Weight-Verfahren, bei dem die dosierte Menge anhand einer Messung des Gewichtes eines das zu dosierende Gut enthaltenden Vorratsbehälters vor und nach der Entnahme des Gutes bestimmt wird. Nachteilig bei diesem Verfahren ist insbesondere die geringe Genauigkeit, da der Wiegebereich der Wiegeeinrichtung auf das Gewicht des Vorratsbehälters mit Inhalt abgestimmt werden muß und daher insbesondere geringe Mengen nicht mit der erwünschten Genauigkeit gravimetrisch erfasst werden können. Ausserdem kann das Dosierergebnis von verschiedenen Faktoren, wie Erschütterungen und Schwingungen leicht beeinflusst werden, wenn die Wiegeeinrichtung unmittelbar an der Verarbeitungsmaschine angebracht ist. Dagegen wird die Genauigkeit der volumetrischen Dosierung weniger durch Erschütterungen und dgl. beeinträchtigt, so daß sich diese Art der Dosierung besonders zum unmittelbaren Einsatz an der Verarbeitungsmaschine eignet. Bei einer bekannten Dosiervorrichtung dieser Art, z.B. gemäß DE-PS 22 14 982, weist eine drehbar gelagerte Scheibe mehrere Dosierkammern mit bekanntem Volumen auf, die nacheinander mit dem zu dosierenden Gut aus einem Vorratsbehälter gefüllt werden und ihren Inhalt in den Fülltrichter bzw. Mischbehälter der Verarbeitungsmaschine entleeren, bis ein vorgegebenes, volumetrisches Mischungsverhältnis erreicht ist. Die Dosiergenauigkeit dieser Vorrichtung reicht für viele Anwendungsfälle aus. Es treten dabei jedoch Ungenauigkeiten infolge von Schwankungen des spezifischen Volumens, durch ungleichmässige Teilchengrösse sowie durch andere, Änderungen unterworfene Faktoren auf.

Der Erfindung liegt die Aufgabe zugrunde, ein Verfahren und eine zugehörige Vorrichtung zum Dosieren zu schaffen, die die Herstellung einer Mischung in einem vorgegebenen, gravimetrischen Mischungsverhältnis mit hoher Genauigkeit erlauben und geeignet sind, unmittelbar an der Verarbeitungsmaschine eingesetzt zu werden.

Zur Lösung dieser Aufgabe sieht die Erfindung vor, daß zunächst je Komponente eine oder mehrere Basismengen volumetrisch dosiert werden (z.B. mit einer Vordosiereinrichtung 3), daß sodann das Gewicht der Basismenge oder das Gewicht einer ganzzahligen Anzahl von Basismengen jeder Komponente ermittelt wird und daß daraufhin das Mischungsverhältnis/Gewichtsverhältnis der Basismengen der verschiedenen Komponenten ermittelt und mit einem Sollwert (dem gewünschten Mischungsverhältnis) verglichen wird, woraufhin im Falle einer Abweichung des ermittelten Mischungsverhältnisses/Gewichtsverhältnisses vom Sollwert zwecks Korrektur die Anzahl der Basismengen der jeweiligen Komponenten geändert und die obigen Schritte erneut bis zum Erreichen des Sollwertes oder eines tolerierbaren Mischungsverhältnisses/ Gewichtsverhältnisses wiederholt werden.

Das erfindungsgemäße Verfahren stellt eine Kombination von volumetrischer und gravimetrischer Dosierung dar. Zunächst werden Basismengen mit Hilfe bekannter, volumetrisch arbeitender Dosierscheiben abgemessen und bilden je Komponente eine Teilmenge. Diese Teilmengen werden gesondert gewogen, woraufhin das tatsächlich vorliegende, gravimetrische Mischungsverhältnis der Teilmengen mehrerer Komponenten rechnerisch ermittelt wird. Daraufhin werden die Basismengen für eine zweite oder dritte usw. Meßreihe gegebenenfalls derart geändert, dass schließlich der Sollwert des angestrebten Mischungsverhältnisses erreicht wird.

Bei einem konkreten Anwendungsfall wird als Basismenge das Kammervolumen einer mehrere Dosierkammern aufweisenden Dosierscheibe benutzt. Z.B. bilden eine, zwei, drei, vier oder fünf usw. Dosierkammern dieser Dosierscheibe eine Teilmenge. In gleicher Weise werden auch von den anderen Komponenten zunächst Teilmengen geeigneter Größe gebildet und diese Teilmengen werden von jeder Komponente sodann gewogen. Daraufhin wird das gravimetrische Mischungsverhältnis, d.h. also ihr Gewichtsverhältnis festgestellt. Sofern dieses Mischungsverhältnis von dem Sollwert abweicht, wird die Anzahl der jeweiligen Basismengen, d.h. die Anzahl der für die einzelnen Komponenten benötigten Dosierkammern geändert, so daß schließlich nach einer oder mehreren Meßreihen ein sehr genaues Mischungsverhältnis vorliegt.

Die Vorrichtung zur Durchführung des Verfahrens umfaßt einen Behälter für jede einzelne Komponente, je eine volumetrisch arbeitende Vordosiereinrichtung mit einem Mischbehälter zur Bildung einer Teilmenge aus einer Folge von Basismengen jeder Komponente, wobei die Anzahl der zu bildenden Basismengen einstellbar ist, je eine Wiegeeinrichtung zur Erfassung des Gewichtes der von der Vordosiereinrichtung bei einem Dosierzyklus gebildeteten Anzahl an Basismengen und zur Abgabe eines dafür maßgebenden Signals, und ferner eine Steuereinrichtung, an der die Signale aller Wiegeeinrichtungen anliegen, um aus dem erfassten Gewicht und einem vorgegebenen Gewicht für einen Dosierzyklus ein Signal zur Steuerung der Vordosiereinrichtungen abzuleiten und um die Anzahl der bei einem Dosierzyklus zu bildenden Basismengen so einzustellen, daß das gewünschte Mischungsverhältnis erreicht wird.

Der Vorteil des erfindungsgemäßen Verfahrens und der zugehörigen Vorrichtung besteht insbesondere darin, daß es möglich ist, auch kleine, aus mehreren Komponenten bestehende Mischungen sehr genau herzustellen.

Ferner gestatten es das erfindungsgemäße Verfahren und die zugehörige Vorrichtung, bereits im Einsatz befindliche, rein volumetrisch arbeitende Dosiervorrichtungen mit erfindungsgemäßen Komponenten zu ergänzen, so daß sie auf gravimetrische Dosierung umgerüstet werden können.

Weitere Merkmale der Erfindung gehen aus Unteransprüchen im Zusammenhang mit der Beschreibung und der Zeichnung hervor.

Die Erfindung wird nachstehend anhand eines Ausführungsbeispieles, das in der Zeichnung dargestellt ist, näher beschrieben. Dabei zeigen:

Fig. 1     eine schematische Ansicht der Vorrichtung zum Dosieren;

Fig. 2     in größerem Maßstab einen Schnitt durch die Wiegeeinrichtung längs der Linie II - II in Fig. 1.

Fig. 3     einen Schnitt längs der Linie III-III in Fig. 1 und

Fig. 4     eine Ansicht wie in Fig. 1 von einer abgewandelten Vorrichtung.

Eine Vorrichtung 1 zum Dosieren umfaßt für jede Komponente z.B. A, B, C bzw. D einer herzustellenden Mischung M einen Vorratsbehälter 2, eine volumetrisch arbeitende Vordosiereinrichtung 3 und eine Wiegeeinrichtung 4 zur gravimetrischen Erfassung des Gesamtgewichtes einer Teilmenge, die aus einer oder mehreren, von der Vordosiereinrichtung 3 an die Wiegeeinrichtung 4 abgegebenen Basismengen besteht.

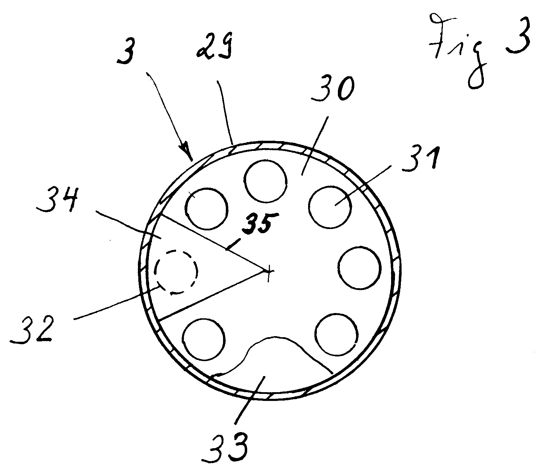

Die volumetrisch arbeitende Vordosiereinrichtung 3 wird je nach Beschaffenheit der zu dosierenden Komponenten ausgewählt und kann daher unterschiedlich gestaltet sein. Gemäß dem in den Figuren darstellten Ausführungsbeispiel soll rieselfähiges Gut, z.B. Kunststoffgranulat, dosiert werden. Für diesen Anwendungsfall sind volumetrisch arbeitende Dosiereinrichtungen, die als Vordosiereinrichtung 3 verwendet werden können, grundsätzlich bekannt und weisen gemäß Fig. 3 eine in einem Gehäuse 29 drehbar gelagerte Dosierscheibe 3o mit mehreren, an deren Umfang angeordneten, als Dosierkammern 31 dienenden Bohrungen auf. Das Material fällt aus dem Vorratsbehälter 2 unmittelbar in die Vordosiereinrichtung 3 und füllt dort die Dosierkammern 31 der Dosierscheibe 3o. Die von einer derartigen Dosierkammer 31 beim Vordosieren aufgenommene und dann an die Wiegeeinrichtung 4 abgegebene Menge entspricht einer Basismenge. Eine oder mehrere Basismengen bilden eine Teilmenge, deren Gewicht beim Wiegevorgang mit Hilfe der Wiegeeinrichtung 4 ermittelt wird.

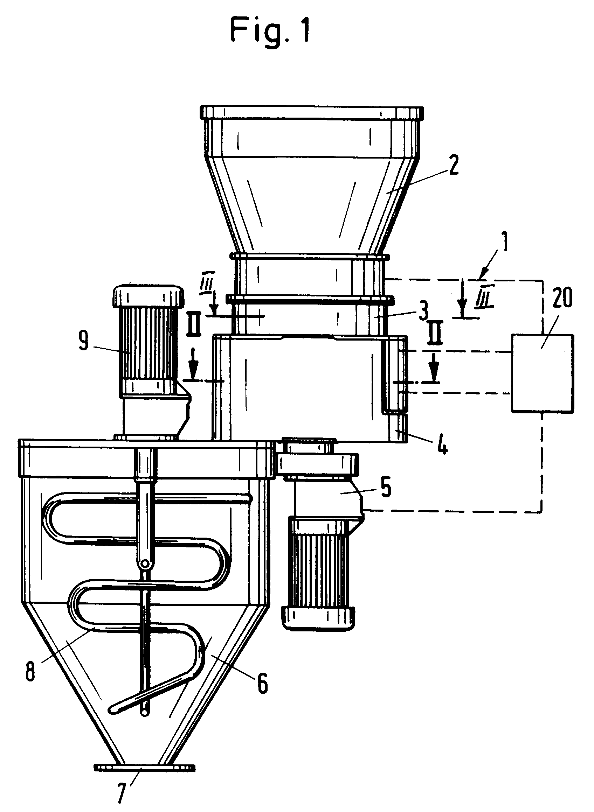

Die Wiegeeinrichtung 4 befindet sich unterhalb von der Vordosiereinrichtung 3. Das Material fällt aus der Dosierkammer 31 durch eine Öffnung 32 im Boden 33 des Gehäuses 29 der Vordosiereinrichtung 3, wenn sich die Dosierkammer 31 unmittelbar über der Öffnung 32 im Boden 33 befindet. Als Antrieb für die Dosierscheibe 3o ist ein Schrittmotor 5 vorgesehen. Dieser Schrittmotor 5 ist unterhalb der Wiegeeinrichtung 4 angeordnet, wie aus Fig. 1 hervorgeht.

Um zu erreichen, daß immer nur eine genau volumetrisch vordosierte Menge entsprechend dem Kammervolumen der Dosierkammer 31 durch die Öffnung 32 im Boden 33 auf die Wiegeeinrichtung 4 fällt, befindet sich eine Deckplatte 34 über der Dosierscheibe 31 im Bereich der Öffnung 32. Entsprechend der Drehrichtung der Dosierscheibe 3o dienen der bzw. die Ränder 35 ferner als Abstreifer und sorgen für eine gleichmäßige Füllung aller Dosierkammern 31.

Der genaue Aufbau und die Gestaltung der Vordosiereinrichtung 3 interessiert im Rahmen der vorliegenden Erfindung nicht näher, da hierfür geeignete, volumetrisch arbeitende Dosiereinrichtungen bekannt sind (DE-PS 22 14 982).

Bei der Verarbeitung von flüssigem oder pasteusem Gut kann die Vordosiereinrichtung eine Membran-, Schlauch-, Kolben- oder Zahnradpumpe sein, wie sie ebenfalls in umfangreichem Maße Stand der Technik ist.

In der Wiegeeinrichtung 4 werden Teilmengen des im Vorratsbehälter 2 befindlichen Gutes gewogen, wobei diese Teilmengen - wie bereits oben gesagt - aus einer oder mehreren Basismengen entsprechend einem oder mehreren Kammervolumina der Dosierscheibe bestehen.

Sobald das Gewicht der Teilmenge ermittelt ist, gelangt sie in einen Fülltrichter 6 einer in den Figuren nicht dargestellten Verarbeitungsmaschine. Dieser Fülltrichter 6 weist bodenseitig eine verschließbare Klappe 7 sowie ein Rührwerk 8 mit einem Motor 9 auf. Die Teilmengen a,b,c oder d usw. verschiedener Komponenten A,B,C bzw. D aus entsprechend vielen Vorratsbehältern 2, Vordosiereinrichtungen 3 und Wiegeeinrichtungen 4 werden in den Fülltrichter 6 gegeben und dort gemischt, nachdem jeweils das Gewicht der Teilmengen a,b,c bzw. d ermittelt und das Mischungsverhältnis ( % ) ermittelt wurde. Nach einer ersten Meßreihe festgestellte Abweichungen von einem angestrebten Sollwert werden daraufhin in der Weise korrigiert, daß die volumetrisch erhältlichen Teilmengen a,b,c bzw. d für eine zweite Meßreihe und danach gegebenenfalls für weitere Korrekturmessungen durch Veränderung der Anzahl der Basismengen, also durch Veränderung der Anzahl der eingesetzten Kammervolumina derart geändert werden, daß schließlich der Sollwert für das angestrebte Mischungsverhältnis erreicht wird.

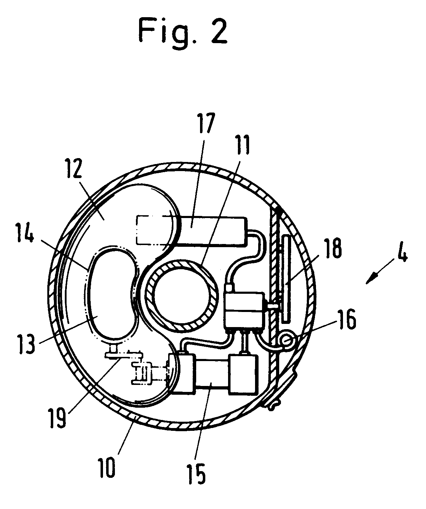

Die Wiegeeinrichtung 4 umfaßt gemäß Figur 2 ein zylindrisches Gehäuse 10, auf dessen einen Stirnseite die Vordosiereinrichtung 3 und der Vorratsbehälter 2 angeordnet sind. Mittig weist das Gehäuse 10 eine Durchtrittsöffnung und eine ringförmige Wand 11 auf, durch die eine nicht dargestellte Antriebswelle von dem Schrittmotor 5 zur Dosierscheibe der Vordosiereinrichtung 3 führt.

In dem Gehäuse 10 befindet sich ferner ein Aufnahmegefäß 12 für die von der Vordosiereinrichtung 3 in einzelnen Basismengen abgegebene Teilmenge der zu wiegenden Komponente. Das Aufnahmegefäß 12 ist gemäß Ausführungsbeispiel und in Draufsicht gemäß Figur 2 nierenförmig sowie senkrecht zu Figur 2 im wesentlichen trichterförmig und weist entsprechend eine Einlaßöffnung mit großem Querschnitt und eine Auslaßöffnung 13 mit geringerem Querschnitt auf. Die Auslaßöffnung 13 ist mit dem Fülltrichter 6 verbunden und mit Hilfe einer Bodenklappe 14 o.dgl. verschließbar.

Zum Öffnen und Schließen der Bodenklappe 14 sind eine Servoeinrichtung 15 mit Zylinder und Kolbenstange, sowie eine pneumatische Energieversorgung 16 und Steuerventile sowie Leitungen vorgesehen. Ferner ist ein Element 17 zum Wiegen vorhanden, bei dem es sich um eine Wiegezelle oder ein anderes, elektro-mechanisch arbeitendes Wandlerelement handelt. Das Aufnahmegefäß 12 stützt sich unmittelbar auf dem Wiegeelement 17 ab, so daß es jeweils mit dem Gewicht des Aufnahmegefäßes 12 und der sich in dem Aufnahmegefäß 12 befindlichen Teilmenge des zu wiegenden Gutes belastet wird. Das Wiegeelement 17 liefert ein für das erfasste Gewicht kennzeichnendes elektrisches Signal, welches an einer Leiterplatte 18 abgegriffen werden kann.

Das zum Öffnen und Schließen der Bodenklappe 14 dienende Gestänge 19 kann in einer dem Fachmann grundsätzlich bekannten Weise so ausgebildet sein, daß die Verbindung zwischen der Kolbenstange der Servoeinrichtung 15 und der Bodenklappe 14 nur während der Öffnungsbewegung gegeben ist, während diese Verbindung in der Schließstellung unterbrochen ist. Hiermit wird sichergestellt, daß der Wiegevorgang nicht durch das Gestänge 19 beeinflußt wird.

Die von dem zum Wiegen dienenden Element 17 erhältlichen Angaben zum Gewicht einer aus einer oder mehreren Basismengen bestehenden Teilmenge des im Vorratsbehälter 2 befindlichen Gutes werden in einem Steuergerät 2o verarbeitet, welches auch entsprechende Werte von den Vordosiereinrichtungen 3 und Wiegeeinrichtungen 4 der anderen Komponenten der herzustellenden Mischung erhält. Auf Grund der in dem Steuergerät 2o zusammenfließenden Angaben wird das tatsächliche Mischungsverhältnis berechnet. Sodann werden zwecks Korrektur die Teilmengen durch Verändern der Anzahl der von den Vordosiereinrichtungen 3 an die Wiegeeinrichtungen 4 gelieferten Basismengen geändert, bis der angestrebte Sollwert des Mischungsverhältnisses in optimaler Weise erreicht wird.

Das Kammervolumen der Dosierkammern kann bei den verschiedenen Vordosiereinrichtungen 3 gleich groß oder unterschiedlich groß sein und grundsätzlich gleiches gilt für die Größe der Aufnahmegefäße 12 und die Kapazität der Wiegeelemente 17. Die Abweichungen von dem angestrebten Sollwert für das Mischungsverhältnis werden schließlich nur dann so gering wie möglich sein, wenn auch die Systemfehler beim volumetrischen Vordosieren und beim gravimetrischen Erfassen des Gewichtes der Teilmengen niedrig sind.

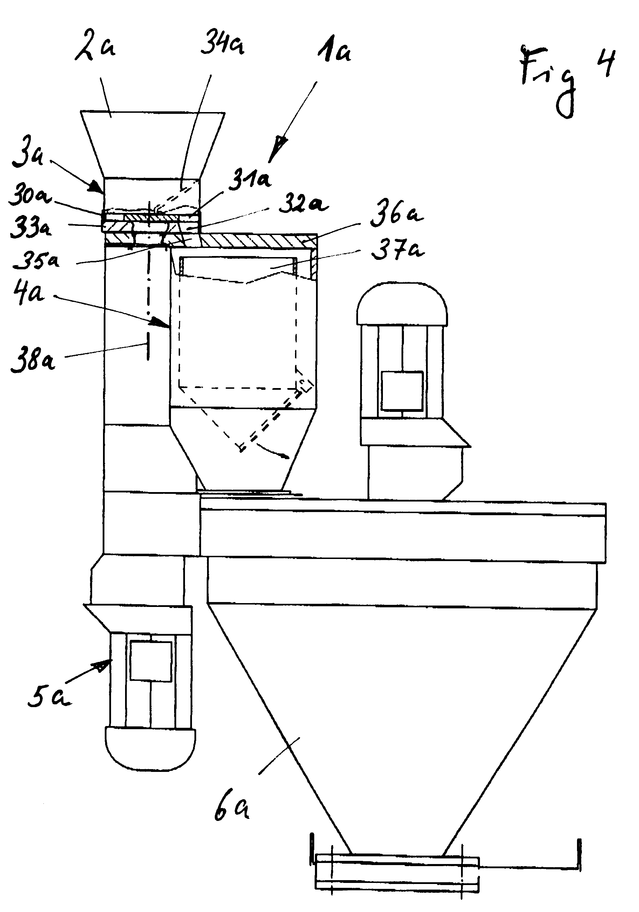

Fig. 4 zeigt eine abgewandelte Ausführungsform, wobei gleiche Teile mit denselben Bezugszahlen und einem Index a bezeichnet sind.

Die Vorrichtung 1a unterscheidet sich von der Vorrichtung 1 vor allem dadurch, daß die Vordosiereinrichtung 3a versetzt zu der Wiegeeinrichtung 4a angeordnet ist. Während sich die Vordosiereinrichtung 3 unmittelbar konzentrisch über der Wiegeeinrichtung 4 gemäß Fig. 1 befindet, ist dies bei der Vorrichtung 1a nicht der Fall.

Die versetzte Anordnung von Vordosiereinrichtung 3a und Wiegeeinrichtung 4a erlaubt eine optimale Ausnutzung des am Umfang bzw. über einem Fülltrichter 6a befindlichen Platzes, so daß in zweckmäßiger Weise mehrere Vorrichtungen 1a an einem Fülltrichter 6a angeordnet werden können.

Aus der Öffnung 32a im Boden 33a der Vordosiereinrichtung 3a fällt das Material durch eine weitere Öffnung 35a in einer Träger- und Abdeckplatte 36a der Wiegeeinrichtung 4a in deren Inneres 37a. Dort gelangt das Material bzw. das zu wiegende Gut auf die zum Wiegen dienenden Teile, die identisch mit denen gemäß Fig. 2 übereinstimmen oder bei Verwendung einer andersartigen Wiegeeinrichtung entsprechend abgewandelt sind.

Ein weiterer Vorteil der Vorrichtung 1a besteht darin, daß die Antriebswelle 38a für die Vordosierscheibe 3oa nicht durch das Gehäuse der Wiegeeinrichtung 4a verläuft, sondern außerhalb davon angeordnet ist. Aufbau und Konstruktion der Vorrichtung 1a sind daher einfacher.

**Patentansprüche**

1. Verfahren zum Dosieren von teilchenförmigem (z.B. Granulat), flüssigem oder pastösem Gut (Material), insbesondere zum Herstellen einer Mischung aus mindestens zwei Komponenten in einem vorgegebenen, gravimetrischen Mischungsverhältnis, dadurch gekennzeichnet,
   a) daß zunächst je Komponente eine oder mehrere Basismengen volumetrisch dosiert werden (z.B. Vordosiereinrichtung (3)),
   b) daß sodann das Gewicht der Basismenge oder das Gewicht einer ganzzahligen Anzahl von Basismengen jeder Komponente ermittelt wird und
   c) daß daraufhin das Mischungsverhältnis/Gewichtsverhältnis der Basismengen der verschiedenen Komponenten ermittelt und mit einem Sollwert (dem gewünschten Mischungsverhältnis) verglichen wird,
   d) woraufhin im Falle einer Abweichung des ermittelten Mischungsverhältnisses/Gewichtsverhältnisses vom vom Sollwert zwecks Korrektur die Anzahl der Basismengen der jeweiligen Komponenten geändert und
   e) die Schritte a), b) und c) erneut bis zum Erreichen des Sollwertes oder eines tolerierbaren Mischungsvrhältnisses/Gewichtsverhältnisseswiederholt werden.

2. Verfahren nach Anspruch 1, dadurch gekennzeichne, daß je Komponente eine oder mehrere Basismengen eine Teilmenge bilden.

3. Verfahren nach Anspruch 1 und 2, dadurch gekennzeichnet, daß die Volumina der Dosierkammern beim volumetrischen Dosieren für alle Komponenten gleich groß sind.

4. Verfahren nach Anspruch 1 und 2, dadurch gekennzeichnet, daß die Volumina der Dosierkammern für verschiedene Komponenten verschieden groß sind.

5. Vorrichtung zum Dosieren von teilchenförmigem, flüssigem oder pastösem Gut zur Durchführung des Verfahrens nach einem oder mehreren der Ansprüche 1 bis 4, gekennzeichnet durch

   a) einen Vorratsbehälter (2) für jede Komponente (A, B, C, D usw.) der herzustellenden Mischung (M),
   b) je eine volumetrisch arbeitende Vordosiereinrichtung (3) zur Bildung einer Teilmenge aus einer Anzahl von Basismengen der Komponenten, wobei die Anzahl der zu bildenden Basismengen einstellbar ist,
   c) je eine Wiegeeinrichtung (4) zur Erfassung des Gewichtes der von der Vordosiereinrichtung (3) bei einem Dosierzyklus gebildeten Anzahl von Basismengen (Teilmengen) und zur Abgabe eines dafür maßgebenden Signales, und
   d) eine Steuereinrichtung (20), an der die Signale aller Wiegeeinrichtungen (4) anliegen und das Mischungsverhältnis errechnet wird und zwecks Korrektur aus dem erfaßten Gewicht und einem vorgegebenen Gewicht für einen oder mehrere, weitere Dosierzyklen ein Signal zur Steuerung der Vordosiereinrichtung (3) abgeleitet wird, wobei die Anzahl der bei dem weiteren Dosierzyklus zu bildenden Basismengen so eingestellt wird, daß das erfaßte, tatsächliche Mischungsverhältnis nahe an das vorgegebene, gravimetrische Mischungsverhältnis (Gewichtsverhältnis) kommt.

6. Vorrichtung nach Anspruch 5, dadurch gekennzeichnet, daß die Vordosiereinrichtung (3) eine Dosierscheibe mit am Umfang angeordneten Dosierkammern umfaßt, deren Volumen jeweils dem einer Basismenge entspricht.

7. Vorrichtung nach Anspruch 5 und 6, dadurch gekennzeichnet, daß die Wiegeeinrichtung (4) ein unterhalb der Abgabeöffnung der volumetrisch arbeitenden Vordosiereinrichtung (3) angeordnetes Aufnahmegefäß (12) mit einer bodenseitig angeordneten, verschließbaren Auslaßöffnung (13) sowie mit einem Element (17) zum Wiegen umfaßt.

8. Vorrichtung nach einem oder mehreren der Ansprüche 5 - 7, dadurch gekennzeichnet, daß das Element (17) zum Wiegen eine Wiegezelle ist.

EP 0 464 697 A2

# Fig. 1

# Fig. 2

Fig 3

Fig 4